# EUROPÄISCHE PATENTSCHRIFT

(11) **EP 0 710 539 B1**
(45) Veröffentlichungstag und Bekanntmachung des Hinweises auf die Patenterteilung: **07.06.2000**
(21) Anmeldenummer: 95116728.7
(22) Anmeldetag: 24.10.1995
(51) Int. Cl.: B29D 9/00, B29C 45/16, B29C 47/06

(54) **VERFAHREN ZUM HERSTELLEN EINES FORMTEILS MIT DIREKT ANGEFORMTEN FUNKTIONSELEMENTEN**
METHOD OF MANUFACTURING ARTICLES WITH INTEGRALLY MOLDED FUNCTIONAL ELEMENTS
METHODE FABRICATION D'ARTICLES COMPRENANT DES ELEMENTS FONCTIONNELS MOULES

(30) Priorität: 07.11.1994 DE 4439766
(43) Veröffentlichungstag der Anmeldung: 08.05.1996
(73) Patentinhaber: Ticona GmbH, 65451 Kelsterbach (DE)
(72) Erfinder: Reil, Frank, D-64579 Gernsheim (DE); Reuter, Frank, D-63792 Grosostheim (DE); Haack, Ulrich, D-64665 Alsbach (DE); Reuschel, Gerhard, Dr., D-65835 Liederbach (DE)

(56) Entgegenhaltungen:
- FR-A- 2 207 806
- FR-A- 2 608 501
- GB-A- 2 160 146
- DATABASE WPI Week 8923 Derwent Publications Ltd., London, GB; AN 89-169534 & JP-A-01 110 918 (OSHITA SANGYO KK ) , 27.April 1989
- DATABASE WPI Week 8849 Derwent Publications Ltd., London, GB; AN 88-351343 & JP-A-63 264 688 (ASAHI CHEMICAL IND KK) , 1.November 1988
- DATABASE WPI Week 8832 Derwent Publications Ltd., London, GB; AN 88-225694 & JP-A-63 162 210 (HASHIMOTO FORMING KOGYO) , 5.Juli 1988
- PATENT ABSTRACTS OF JAPAN vol. 13 no. 339 (C-624) ,31.Juli 1989 & JP-A-01 118533 (ASAHI CHEM IND CO LTD) 11.Mai 1989,
- DATABASE WPI Week 8905 Derwent Publications Ltd., London, GB; AN 89-034491 & JP-A-63 306 014 (ASAHI CHEMICAL IND KK) , 14.Dezember 1988
- PATENT ABSTRACTS OF JAPAN vol. 13 no. 545 (M-902) ,6.Dezember 1989 & JP-A-01 225523 (HITACHI LTD) 8.September 1989,
- PATENT ABSTRACTS OF JAPAN vol. 14 no. 107 (M-0942) ,27.Februar 1990 & JP-A-01 310911 (N O K MEGURASUTEITSUKU KK) 15.Dezember 1989,
- DATABASE WPI Week 9530 Derwent Publications Ltd., London, GB; AN 95-227893 & JP-A-07 137 089 (YAMASHITA DENKI KK) , 30.Mai 1995

## Beschreibung

Die Erfindung betrifft die Herstellung von Formteilen aus einer Kombination des technischen Werkstoffs Polyacetal, insbesondere Polyoxymethylen, mit direkt angeformten Funktionselementen aus einem oder mehreren Elastomeren.

Der technische Werkstoff Polyacetal, insbesondere Polyoxymethylen (POM), hat ausgezeichnete mechanische Eigenschaften und ist darüber hinaus auch widerstandsfähig gegen alle üblichen Lösemittel und Kraftstoffe. Formteile aus Polyoxymethylen werden daher häufig in kraftstofführenden Systemen verwendet. Aufgrund der sehr guten Resistenz gegen Chemikalien werden auch Gehäuse aus Polyoxymethylen hergestellt. POM weist aber einen niedrigen mechanischen Dämpfungsfaktor auf, was in einigen Anwendungsfällen den Einsatz von weichen Dämpfungselementen erforderlich macht. Beim Einbau von Formteilen aus Polyoxymethylen ist zudem oftmals an Verbindungsstellen eine Abdichtung erforderlich. Die hohe Oberflächenhärte von Formteilen aus POM und der niedrige Gleitreibungskoeffizient von POM können zu einem Verrutschen von aufliegenden Gegenständen führen und die Bediensicherheit von Schaltelementen und Bedienungselementen aus POM einschränken.

Bislang werden Dichtungen und Dämpfungselemente separat bereitgestellt und üblicherweise in einem zusätzlichen Arbeitsschritt mechanisch verankert, was zusätzliche Arbeit und teilweise erhebliche Zusatzkosten verursacht. Ähnlich ist in JP-A-1110918 ein Verfahren offenbart, in dem ein Clip aus Polyacetal und eine Kappe aus einem Kautschuk getrennt voneinander in einem Mehrkomponentenspritzgußverfahren hergestellt und anschließend ineinander gesteckt werden.

Verfahren zur Herstellung von Verbundmaterialien aus einem Thermoplasten mit einem Elastomeren werden auch in DE-C-4314191 und JP-A-5057820 offenbart. In diesen Verfahren werden die Kunststoffe coextrudiert und anschließend covulkanisiert.

Aufgabe der vorliegenden Erfindung war es, ein Formteil aus Polyacetal mit direkt angeformten Funktionselementen zu schaffen, bei dem die Haftfestigkeit zwischen dem Formteil als solchem und den Funktionselementen verbessert ist, ohne daß zusätzliche Klebstoffschichten oder eine mechanische Verankerung notwendig ist.

Gelöst wird diese Aufgabe durch ein Verfahren gemäß Anspruch 1.

Als Nitrilkautschuk hat sich erfindungsgemäß besonders Acrylnitril-Butadien-Copolymer bewährt. Es war überraschend, daß die genannten Kautschuke eine sehr gute Haftfestigkeit zu dem Polyoxymethylen der Formteile aufweisen.

Als Funktionselemente sollen im Rahmen der vorliegenden Erfindung z.B. Dicht- und/oder Dämpfungselemente verstanden werden oder aber auch Bereiche zur Verbesserung der Rutschfestigkeit wie Griffmulden und ähnliches.

Das Merkmal "direkt angeformt" soll im Rahmen der vorliegenden Erfindung so verstanden werden, daß die Funktionselemente zusammen mit den Formteilen aus POM, mit denen sie einen haftfesten Verbund eingehen sollen, in einem Einstufenverfahren nach dem Mehrkomponentenspritzgußverfahren hergestellt werden.

Als Maß für die Haftfestigkeit wird die Abschälkraft zweier durch das Elastomer verbundener Platten aus POM mit einer Breite von 15 mm bestimmt. Vorzugsweise beträgt die Abschälkraft zwischen dem Formteil und den direkt angeformten Funktionselementen wenigstens 10 N, vorzugsweise wenigstens 15 N.

Durch den Einsatz der oben angegebenen Elastomeren können die Dicht- oder Dämpfungselemente direkt an Formteile aus POM angeformt werden, ohne daß weitere Montageschritte erforderlich werden. Durch den Wegfall der bisher benötigten Verarbeitungsschritte zur Montage von Funktionselementen ist eine erhebliche Kosteneinsparung bei der Produktion der erfindungsgemäßen Formteile und bei deren Montage zu erzielen.

Anwendungsfelder für die erfindungsgemäßen Formteile sind beispielsweise Gehäuse im Automobilbau wie Türschloßgehäuse, Fensterhebergehäuse, Schiebedachdichtelemente und ähnliche sowie Befestigungselemente mit guten Dämpfungseigenschaften wie beispielsweise Clips oder rutschfeste Bedienungselemente wie Knöpfe oder Griffmulden an Schreibstiften oder Schalthebeln.

## Patentansprüche

1. Verfahren zum Herstellen eines Formteils aus einer Kombination von Polyacetal mit direkt angeformten Funktionselementen, wobei die Funktionselemente aus einem oder mehreren Elastomeren bestehen, die teilweise oder vollständig hydrierte Nitrilkautschuke, ein- und mehrkomponenten Silikonkautschuke oder schwefelhaltige Kautschuke enthalten, und wobei die Funktionselemente zusammen mit den Formteilen aus Polyacetal in einem Einstufenverfahren nach dem Mehrkomponentenspritzgußverfahren geformt werden.

2. Verfahren nach Anspruch 1, dadurch gekennzeichnet, daß die Funktionselemente aus Acrylnitril-Butadien-Copolymeren oder Styrol-Butadien-Copolymeren aufgebaut sind.

3. Verwendung eines Formteils hergestellt nach Anspruch 1 oder 2 als Gehäuse wie Türschloßgehäuse oder Fensterhebergehäuse.

4. Verwendung eines Formteils hergestellt nach Anspruch 1 oder 2 als Befestigungselement mit guten Dämpfungseigenschaften, vorzugsweise als Clip.

5. Verwendung eines Formteils hergestellt nach Anspruch 1 oder 2 zur Herstellung von rutschfesten Bedienungselementen wie Knöpfen oder Griffmulden an Schreibstiften oder Schalthebeln.

## Claims

1. A process for the production of a molding made from a combination of polyacetal with directly molded-on function elements, in which the function elements comprise one or more elastomers which comprise partially or fully hydrogenated nitrile rubbers, one- and multicomponent silicone rubbers or sulfur-containing rubbers, and in which the function elements are molded together with the polyacetal moldings in a one-step process by the multicomponent injection-molding process.

2. The process as claimed in claim 1, wherein the function elements are made from acrylonitrile-butadiene copolymers or styrene-butadiene copolymers.

3. The use of a molding produced as claimed in claim 1 or 2 as a housing, such as a door-lock housing or a window-winder housing.

4. The use of a molding produced as claimed in claim 1 or 2 as a fixing element having good damping properties, preferably as a clip.

5. The use of a molding produced as claimed in claim 1 or 2 for the production of non-slip controls, such as knobs or grip dimples on pens or gearsticks.

## Revendications

1. Méthode de fabrication d'une pièce moulée à partir d'une combinaison d'un polyacétal avec des éléments fonctionnels directement moulés dessus, les éléments fonctionnels étant constitués d'un ou de plusieurs élastomères qui contiennent des caoutchoucs nitrile partiellement ou complètement hydratés, des caoutchoucs de silicone à un ou plusieurs composants ou des caoutchoucs soufrés et les éléments fonctionnels étant formés conjointement avec les pièces moulées en polyacétal dans un procédé en une étape selon le procédé de moulage par injection à plusieurs composants.

2. Méthode suivant la revendication 1, caractérisée en ce que les éléments fonctionnels sont constitués de copolymères d'acrylonitrile/butadiène ou de copolymères de styrène/butadiène.

3. Utilisation d'une pièce moulée fabriquée suivant la revendication 1 ou 2, comme boîtier, tel qu'un boîtier pour serrure de portière ou un boîtier pour remonte-glace.

4. Utilisation d'une pièce moulée fabriquée suivant la revendication 1 ou 2, comme élément de fixation avec de bonnes propriétés d'amortissement, de préférence comme clip.

5. Utilisation d'une pièce moulée fabriquée suivant la revendication 1 ou 2 pour la fabrication d'éléments de commande antidérapants, comme des boutons ou des attaches de stylo ou de leviers de commande.
